# EUROPÄISCHE PATENTANMELDUNG

(11) **EP 1 813 574 A1**
(43) Veröffentlichungstag der Anmeldung: **01.08.2007**
(21) Anmeldenummer: 06100825.6
(22) Anmeldetag: 25.01.2006
(51) Int. Cl.: C01B 33/12, C09C 1/30, C08K 3/36, C09C 3/04

(54) **Zu Schülpen kompaktiertes pyrogen hergestelltes Siliciumdioxid**

(71) Anmelder: Degussa GmbH, 40474 Düsseldorf (DE)
(72) Erfinder: Friehmelt, Rainer Dr., 61169, Friedberg (DE); Hofmann, Ralph Dr., 74722 Buchen (DE); Schachtely, Uwe, 63796, Kahl am Main (DE); Schaffer, Roland, 63589 Linsengericht (DE); Stein, Günter, 61130 Nidderau 4 (DE)

(57) **Zusammenfassung**

Pyrogen hergestelltes Siliciumdioxid wird zu Schülpen kompaktiert, indem man es vorentlüftet, zu Schülpen kompaktiert, die Schülpen bricht und gegebenenfalls klassiert.

Das zu Schülpen kompaktierte Siliciumdioxid weist eine Stampfdichte (nach DIN EN ISO 787-11) von 185 bis 700 g/l auf.

Es kann in Gummimischungen als Füllstoff eingesetzt werden.

## Beschreibung

Die Erfindung betrifft zu Schülpen kompaktiertes pyrogen hergestelltes Siliciumdioxid, ein Verfahren zum Herstellen der Schülpen von pyrogen hergestelltem Siliciumdioxid sowie deren Verwendung.

Es ist bekannt, pyrogen hergestelltes Siliciumdioxid mittels Hochtemperatur oder Flammenhydrolyse aus SiCl₄ oder anderen verdampfbaren Siliciumverbindungen herzustellen (Ullmann's Enzyklopädie der technischen Chemie, 4. Auflage, Band 21, Seite 464 (1982).

Pyrogen hergestellte Siliciumdioxide zeichnen sich durch eine extreme Feinteiligkeit, ein niedriges Schüttgewicht, hohe spezifische Oberfläche, sehr hohe Reinheit, sphärische Teilchenform und das Fehlen von Poren aus.

Die Kompaktierung von pyrogen hergestelltem Siliciumdioxid ist ohne Bindemittel schwierig, weil pyrogen hergestelltes Siliciumdioxid sehr trocken ist, und keine Kapillarkräfte die Partikelbindung herbeiführen können.

Das pyrogen hergestellte Siliciumdioxid weist häufig eine hohe Oberflächenladung, die die Agglomeration elektrostatisch erschwert, auf. Weiterhin weist das pyrogen hergestelltes Siliciumdioxid einen maximalen Feuchtegehalt von 1 % auf.

Es ist bekannt, kolloidales Siliciumdioxid, welches aus dem Abgas aus dem Siliciumschmelzofen stammt, zu verdichten, indem man das kolloidale Siliciumdioxid nahezu horizontal durch ein Paar von senkrecht angeordneten Pressrollen führt (US 5,160,470).

Pyrogen hergestelltes Siliciumdioxid wird dort nicht genannt.

Es ist bekannt, fein verteilte Stoffe mittels zweier nacheinander im rechten Winkel angeordneter Schneckenverdichter zu verdichten (US 3,664,385).

Es ist bekannt, Pulver wie Kieselsäure, mittels Vakuumwalzen, die in Gruppen angeordnet sind, zu verdichten (US 3,632,247).

Es ist bekannt, Pulver mittels eines Schneckenverdichters zu verdichten und die dabei entweichende Luft zurückzuführen, um den Verlust an Pulver zu vermindern (US 5,052,874).

Für bestimmte Anwendungszwecke und Transportmöglichkeiten ist es bekannt, pyrogen hergestelltes Siliciumdioxide zu verdichten oder zu Granulaten zu verformen.

Es ist bekannt, pyrogen hergestelltes Siliciumdioxid mittels der Vorrichtung gemäß US 5,052,874 zu verdichten (US 6,156,285).

Es ist bekannt, pyrogen hergestelltes Siliciumdioxid zu verdichten, indem man es mittels einer Verdichterschnecke, die eine negative Steigung aufweist, verdichtet (US 4,326,852).

Es ist bekannt, pyrogen hergestellte Oxide, wie pyrogen hergestelltes Siliciumdioxid mittels gasdurchlässiger Bänder zu verdichten (US 4,325,686). Mit diesem bekannten Verfahren wird eine Dichte von weniger als 100 g/l erreicht.

Aus der US 4,325,686 Spalte 3 ist es bekannt, pyrogen hergestelltes Siliciumdioxid (fumed silica) mittels der Vorrichtung gemäß der US 3,838,785, US 3,742,566, US 3,762,851 und US 3,860,682 zu verdichten. Dieses Verfahren ergibt eine maximale Stampfdichte von 180 g/l.

Die bekannten Verfahren ergeben keine definierten Kompaktate.

Es ist bekannt, pyrogen hergestelltes Siliciumdioxid mittels eines Pressbandfilters zu verdichten (EP 0280851 B1). Bei diesem Verfahren werden jedoch ebenfalls keine definierten Kompaktate erhalten.

Es ist bekannt, Metalloxide, welche eine Primärteilchengröße von 1 bis 500 µm aufweisen, zu Kompaktaten zu verformen und diese Kompaktate einzeln unter Vakuum in Folien einzuschweißen. Diese so maßgefertigten erhaltenen Vakuumpanel können zur Wärmeisolierung, beispielsweise in Kühlschränken, eingesetzt werden (US 6,132,837).

Es ist bekannt, pyrogen hergestelltes Siliciumdioxid mittels einer Transportschnecke zu verdichten (EP 0010655 A1). Auch bei diesem Verfahren werden keine definierten Kompaktate erhalten.

Es ist weiterhin bekannt, pyrogen hergestelltes Siliciumdioxid zu Granulaten zu formen, indem man das Siliciumdioxid in Wasser dispergiert und sprühtrocknet. Diese Granulate können als Katalysatorträger eingesetzt werden (DE 196 01 415).

Es ist bekannt, Fällungskieselsäure, die einen Feuchtigkeitsgehalt von nicht unter 1 % aufweisen muss, mittels Filterwalzen zu verdichten (DE AS 1807714). Dieses Verfahren hat den Nachteil, daß damit nur eine Wasser enthaltende Kieselsäure verdichtet werden kann.

Es bestand die Aufgabe, pyrogen hergestelltes Siliciumdioxid so zu verdichten, daß ein schüttfähiges Produkt mit definierter Teilchengröße, guter Dosierbarkeit, hoher Schüttdichte und geringem Staubgehalt erhalten wird.

Gegenstand der Erfindung ist ein zu Schülpen kompaktiertes pyrogen hergestelltes Siliciumdioxid, welches dadurch gekennzeichnet ist, daß es eine Stampfdichte (nach DIN EN ISO 787-11) von 185 bis 700 g/l aufweist.

In einer bevorzugten Ausführungsform der Erfindung kann die Stampfdichte (nach DIN EN ISO 787-11) 200 bis 450 g/l betragen.

Als Schülpen bezeichnet man die mehr oder weniger bandförmigen Zwischenprodukte, die bei der Walzenkompaktierung durch die Verpressung des Ausgangsmaterials entstehen. Sie werden in einem zweiten Schritt zerkleinert.

Die Schülpeneigenschaften können durch die prozeduralen Größe, wie der gewährte Prozeßsteuerungsmodus, die Kompaktierkraft, die Breite des Spalts zwischen den beiden Walzen und die Druckhaltezeit, die durch die entsprechende Veränderung der Umdrehungsgeschwindigkeiten der Preßwalzen eingestellt wird, beeinflußt werden.

Unter Kompaktieren wird die mechanische Verdichtung ohne Zusatz von Bindemittel verstanden. In einer besonderen Ausführungsform der Erfindung weisen die Schülpen eine umrissene Gestalt auf, wobei die Größenverteilung mittels Siebung eingestellt werden kann.

Das erfindungsgemäße zu Schülpen kompaktierte, pyrogen hergestellte Siliciumdioxid weist eine hohe Transportstabilität auf.

Ein weiterer Gegenstand der Erfindung ist ein Verfahren zur Herstellung der zu Schülpen kompaktierten pyrogen hergestellten Siliciumdioxids mit einer Stampfdichte (nach DIN EN ISO 787-11) von 185 bis 700 g/l, welches dadurch gekennzeichnet ist, daß man pyrogen hergestelltes Siliciumdioxid vorentlüftet, beziehungsweise vorverdichtet, zu Schülpen kompaktiert, die Schülpen bricht und gegebenenfalls klassiert.

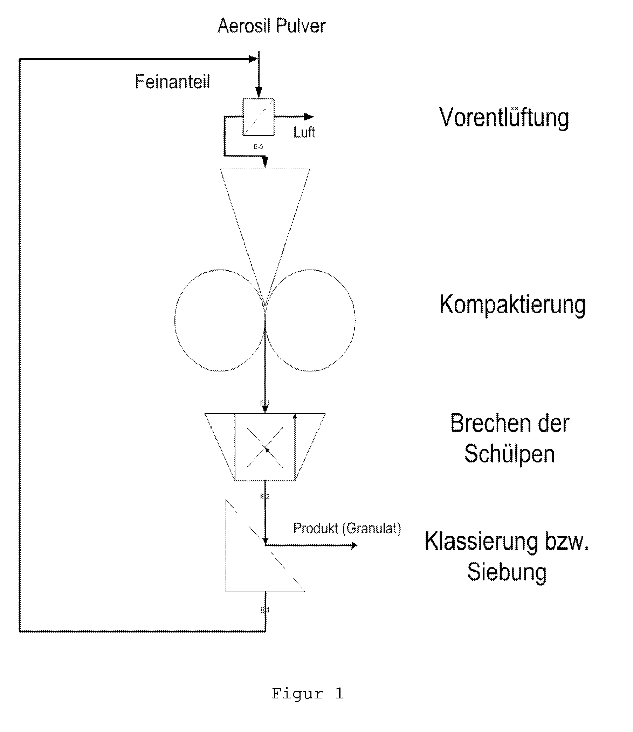

Eine schematische Darstellung des erfindungsgemäßen Verfahrens ist in der Figur 1 dargestellt.

Gemäß Figur 1 wird das pyrogen hergestellte Siliciumdioxid in dem Schritt "Vorentlüftung" mittels bekannter Methoden und Vorrichtungen entlüftet oder vorverdichtet. Dieser Schritt ist notwendig, wenn ein unverdichtetes pyrogen hergestelltes, gegebenenfalls frisch hergestelltes Siliciumdioxid eingesetzt wird.

Wird ein bereits vorverdichtetes pyrogen hergestelltes Siliciumdioxid eingesetzt, kann auf diesen Schritt der Vorentlüftung verzichtet werden.

Das vorentlüftete pyrogen hergestellte Siliciumdioxid wird in dem Schritt der "Kompaktierung" auf die gewünschte Stampfdichte verdichtet (kompaktiert).

Nach dem Kompaktieren werden die Schülpen gebrochen. Gegebenenfalls kann anschließend klassiert beziehungsweise gesiebt werden.

Der Feinanteil, der bei der Siebung anfällt, kann in den Schritt der Vorentlüftung zurückgeführt werden.

Gemäß Erfindung kann als Edukt bei der Vorentlüftung ein unverdichtetes oder ein vorverdichtetes Siliciumdioxid eingesetzt werden.

Die Vorentlüftung kann vor dem Transport oder während des Transports zur Kompaktierung durchgeführt werden.

Vor dem Transport zur Kompaktierung kann die Vorentlüftung mittels eines mit Vakuum beaufschlagten Rohres aus einem Sintermaterial, wie zum Beispiel Sintermetall, erfolgen.

Die Vorentlüftung kann weiterhin in der Transportschnecke erfolgen, wobei die Transportschnecke der Vorrichtung, die ein mit Vakuum beaufschlagtes Rohr umfaßt, nachgeschaltet sein kann.

Es kann in einer weiteren Ausführungsform der Erfindung die Transportschnecke als die alleinige Vorrichtung zur Vorentlüftung eingesetzt werden.

Weiterhin kann die Vorentlüftung mittels einer Transportschnecke erfolgen, die innerhalb eines Rohres, das mit Vakuum beaufschlagt ist, angeordnet ist. Das mit Vakuum beaufschlagte Rohr kann aus einem Sintermantel, wie zum Beispiel Sintermetall, bestehen.

Wenn die Vorrichtung aus einem Vorentlüftungsrohr beispielsweise eines mit Vakuum beaufschlagten Rohres und einer nachgeschalteten Transportschnecke besteht, kann die Vorentlüftung in dem Rohr erfolgen, wenn ein unverdichtetes Siliciumdioxid eingesetzt wird.

Wird ein vorverdichtetes Siliciumdioxid eingesetzt, kann die Vorentlüftung ebenfalls in dem Rohr erfolgen. Es kann auch auf diesen Vorentlüftungsschritt verzichtet werden.

Wird zur Vorentlüftung ausschließlich die Transportschnecke eingesetzt, muß vorverdichtetes Siliciumdioxid eingesetzt werden.

Wird zur Vorentlüftung die Vorrichtung eingesetzt, die eine Transportschnecke innerhalb eines mit Vakuum beaufschlagten Rohres aufweist, kann sowohl das unverdichtete Siliciumdixid als auch das vorverdichtete Siliciumdioxid eingesetzt werden.

Die Vorentlüftung des pyrogen hergestellten Siliciumdioxides kann weiterhin mittels Filtration an einem Filtermedium, wie zum Beispiel einem Tuch oder Sinterwerkstoff, wie zum Beispiel Sintermetall, Sinterkunststoff, Sinterkeramik, porösem Glas, mit kontinuierlichem Filterkuchenabtrag durch beispielsweise eine Förderschnecke oder einen Schaber erfolgen. In einer Ausführungsform der Erfindung kann man ein Sintermetallrohr mit einer Dosierschnecke verwenden.

Die Vorentlüftung kann weiterhin mittels Sedimentation erfolgen, wobei das Aufbrechen von Feststoffbrücken durch überlagerte Vibration, Schall oder langsames Rühren unterstützt wird.

Als Edukt kann ein hydrophiles, pyrogen hergestelltes Siliciumdioxid oder ein hydrophobes, pyrogen hergestelltes Siliciumdioxid eingesetzt werden.

Das hydrophobe pyrogen hergestellte Siliciumdioxid kann mittels Oberflächenmodifizierung hergestellt werden.

Die Oberflächenmodifizierung kann mit einer oder mehreren Verbindungen aus der folgenden Gruppe erfolgen:
a) Organosilane des Types (RO)₃Si(CₙH₂ₙ₊₁) und

(RO)₃Si (CₙH₂ₙ₋₁)

R = Alkyl, wie zum Beispiel Methyl-, Ethyl-, n-Propyl-, i-Propyl-, Butyl-
n = 1 - 20
b) Organosilane des Types R'ₓ(RO)_{y}Si(CₙH₂ₙ₊₁) und

R'ₓ(RO)_{y}Si(CₙH₂ₙ₋₁)

R = Alkyl, wie zum Beispiel Methyl-, Ethyl-, n-Propyl-, i-Propyl-, Butyl-
R' = Alkyl, wie zum Beispiel Methyl-, Ethyl-, n-Propyl-, i-Propyl-, Butyl-
R'=Cycloalkyl
n = 1 - 20
x+y = 3
x = 1,2
y = 1,2
c) Halogenorganosilane des Types X₃Si(CₙH₂ₙ₊₁) und

X₃Si(CₙH₂ₙ₋₁)

X = Cl, Br
n = 1 - 20
d) Halogenorganosilane des Types X₂(R')Si(CₙH₂ₙ₊₁) und

X₂ (R')Si(CₙH₂ₙ₋₁)

X = Cl, Br
R' = Alkyl, wie zum Beispiel Methyl-, Ethyl-, n-Propyl-, i-Propyl-, Butyl-
R'=Cycloalkyl
n = 1 - 20
e) Halogenorganosilane des Types X(R')₂Si(CₙH₂ₙ₊₁) und

X(R')₂Si(CₙH₂ₙ₋₁)

X - Cl, Br
R' = Alkyl, wie zum Beispiel Methyl-, Ethyl-,
R'=Cycloalkyl
n-Propyl-, i-Propyl-, Butyl-
n = 1 - 20
f) Organosilane des Types (RO)₃Si(CH₂)ₘ-R'
R = Alkyl, wie Methyl-, Ethyl-, Propyl-
m = 0,1 - 20
R' = Methyl-, Aryl (zum Beispiel -C₆H₅, substituierte Phenylreste)

-C₄F₉, OCF₂-CHF-CF₃, -C₆F₁₃, -O-CF₂-CHF₂

-NH₂, -N₃, -SCN, -CH=CH₂, -NH-CH₂-CH₂-NH₂,

-N- (CH₂-CH₂-NH₂)₂

-OOC(CH₃)C = CH₂

-OCH₂-CH(O)CH₂

-NH-CO-N-CO-(CH₂)₅

-NH-COO-CH₃, -NH-COO-CH₂-CH₃, -NH-(CH₂)₃Si(OR)₃

-Sₓ-(CH₂)₃Si(OR)₃, wobei X = 1 bis 10 und

R = Alkyl, wie Methyl-, Ehtyl-, Propyl-, Butylsein kann
-SH
-NR'R''R''' (R' = Alkyl, Aryl; R'' = H,
Alkyl, Aryl; R''' = H, Alkyl, Aryl, Benzyl,
C₂H₄NR'''' R''''' mit R'''' = A, Alkyl und
R''''' = H, Alkyl)
g) Organosilane des Typs (R")ₓ(RO)_{y}Si(CH₂)ₘ-R'

| | | | |
|---|---|---|---|
| R" | = Alkyl | x+y | = 2 |
| | = Cycloalkyl | x | = 1,2 |
| | | y | = 1,2 |
| | | m | = 0,1 bis 20 |

R' = Methyl-, Aryl (zum Beispiel -C₆H₅ ,substituierte Phenylreste)

-C₄F₉, -OCF₂-CHF-CF₃, -C₆F₁₃, -O-CF₂-CHF₂

-NH₂, -N₃, -SCN, -CH=CH₂, -NH-CH₂-CH₂-NH₂,

-N-(CH₂-CH₂-NH₂)₂

-OOC(CH₃)C = CH₂

-OCH₂-CH(O)CH₂

-NH-CO-N-CO-(CH₂)₅

-NH-COO-CH₃, -NH-COO-CH₂-CH₃, -NH-(CH₂)₃Si(OR)₃

-Sₓ-(CH₂)₃Si(OR)₃, wobei X = 1 bis 10 und

R = Methyl-, Ethyl-, Propyl-, Butyl- sein kann -SH - NR'R''R''' (R' = Alkyl, Aryl; R'' = H, Alkyl, Aryl; R''' = H, Alkyl, Aryl, Benzyl, C₂H₄NR'''' R''''' mit R'''' = A, Alkyl und R'''''
= H, Alkyl)
h) Halogenorganosilane des Types X₃Si(CH₂)ₘ-R'
X = Cl, Br
m = 0,1 - 20
R' = Methyl-, Aryl (zum Beispiel -C₆H₅, substituierte Pheneylreste)

-C₄F₉, -OCF₂-CHF-CF₃, -C₆F₁₃, -O-CF₂-CHF₂

-NH₂, -N₃, -SCN, -CH=CH₂,

-NH-CH₂-CH₂-NH₂

-N- (CH₂-CH₂-NH₂)₂

-OOC(CH₃)C = CH₂

-OCH₂-CH(O)CH₂

-NH-CO-N-CO-(CH₂)₅

-NH-COO-CH₃, -NH-COO-CH₂-CH₃, -NH-(CH₂)₃Si(OR)₃

-Sₓ-(CH₂)₃Si(OR)₃, wobei X = 1 bis 10 und
R = Methyl-, Ethyl-, Propyl-, Butyl- sein kann -SH
i) Halogenorganosilane des Types (R)X₂Si(CH₂)ₘ-R'
X = Cl, Br
R = Alkyl, wie Methyl,- Ethyl-, Propyl-
m = 0,1 - 20
R' = Methyl-, Aryl (z.B. -C₆H₅, substituierte Phenylreste)

-C₄F₉, -OCF₂-CHF-CF₃, -C₆F₁₃, -O-CF₂-CHF₂

-NH₂, -N₃, -SCN, -CH=CH₂, -NH-CH₂-CH₂-NH₂,

-N- (CH₂-CH₂-NH₂)₂

-OOC(CH₃)C = CH₂

-OCH₂-CH(O)CH₂

-NH-CO-N-CO-(CH₂)₅

-NH-COO-CH₃, -NH-COO-CH₂-CH₃, -NH-(CH₂)₃Si(OR)_{3'}

wobei R = Methyl-, Ethyl-, Propyl-, Butyl- sein kann
-Sₓ-(CH₂)₃Si(OR)₃, wobei R = Methyl-, Ethyl-,
Propyl-, Butyl- und X = 1 bis 10 sein kann -SH
j) Halogenorganosilane des Types (R)₂X Si(CH₂)ₘ-R'
X = Cl, Br
R = Alkyl, wie Methyl-, Ethyl-, Propyl-, Butyl-
m = 0,1 - 20
R' = Methyl-, Aryl (z.B. -C₆H₅, substituierte Phenylreste)

-C₄F₉, -OCF₂-CHF-CF₃, -C₆F₁₃, -O-CF₂-CHF₂

-NH₂, -N₃, -SCN, -CH=CH₂, -NH-CH₂-CH₂-NH₂,

-N-(CH₂-CH₂-NH₂)₂

-OOC(CH₃)C = CH₂

-OCH₂-CH(O)CH₂

-NH-CO-N-CO-(CH₂)₅

-NH-COO-CH₃, -NH-COO-CH₂-CH₃, -NH-(CH₂)₃Si(OR)₃

-Sₓ-(CH₂)₃Si(OR)₃, wobei X = 1 bis 10 und
R = Methyl-, Ethyl-, Propyl-, Butyl- sein kann -SH
k) Silazane des Types 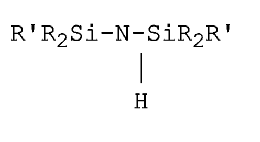 R = Alkyl
R' = Alkyl, Vinyl
l) Cyclische Polysiloxane des Types D 3, D 4, D 5, wobei unter D 3, D 4 und D 5 cyclische Polysiloxane mit 3,4 oder 5 Einheiten des Typs -O-Si(CH₃)₂- verstanden wird. Z.B. Octamethylcyclotetrasiloxan = D 4 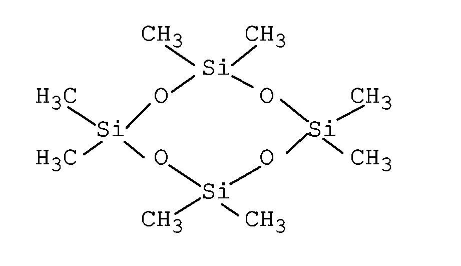 m) Polysiloxane beziehungsweise Silikonöle des Types 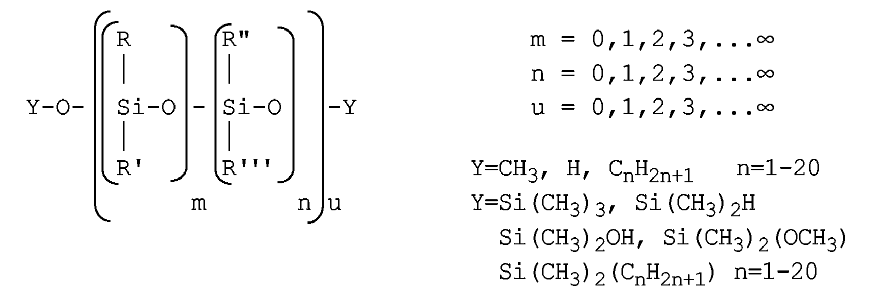
- R =: Alkyl, wie CₙH_{2n+1,} wobei n = 1 bis 20 ist, Aryl, wie Phenyl- und substituierte Phenylreste, (CH₂)ₙ-NH₂, H
- R' =: Alkyl, wie CₙH₂ₙ₊₁, wobei n = 1 bis 20 ist, Aryl, wie Phenyl- und substituierte Phenylreste, (CH₂)ₙ-NH₂, H
- R" =: Alkyl, wie CₙH₂ₙ₊₁, wobei n = 1 bis 20 ist, Aryl, wie Phenyl- und substituierte Phenylreste, (CH₂)ₙ-NH₂, H
- R''' =: Alkyl, wie CₙH₂ₙ₊₁, wobei n = 1 bis 20 ist, Aryl, wie Phenyl- und substituierte Phenylreste, (CH₂)ₙ-NH₂, H

In einer Ausführungsform der Erfindung kann man als Edukt ein vorverdichtetes pyrogen hergestelltes Siliciumdioxid einsetzen.

Das eingesetzte unverdichtete pyrogen hergestellte Siliciumdioxid kann eine Stampfdichte (nach DIN EN ISO 787-11) von kleiner 50 g/l, vorzugsweise von 20 bis 30 g/l aufweisen. Das eingesetzte vorverdichtete pyrogen hergestellte Siliciumdioxid kann eine Stampfdichte (nach DIN EN ISO 787-11) von 50 bis 190 g/l, vorzugsweise 100 bis 150 g/l, aufweisen, wobei bei einem vorverdichteten hydrophoben pyrogen hergestellten Siliciumdioxid die Stampfdichte (nach DIN EN ISO 787-11) 90 bis 120 g/l betragen kann.

Das eingesetzte hydrophile Siliciumdioxid kann im unverdichteten Zustand eine Stampfdichte (nach DIN EN ISO 787-11) von kleiner 50 g/l, vorzugsweise 20 bis 30 g/l aufweisen.

Im vorverdichteten Zustand kann das hydrophile Siliciumdioxid eine Stampfdichte (nach DIN EN ISO 787-11) von 50 bis 190 g/l, vorzugsweise von 100 bis 150 g/l, aufweisen.

Im vorverdichteten Zustand kann das hydrophobe Siliciumdioxid eine Stampfdichte (nach DIN EN ISO 787-11) von 50 bis 190 g/l, vorzugsweise von 90 bis 120 g/l, aufweisen.

Das eingesetzte pyrogen hergestellte Siliciumdioxid kann eine Primärteilchengröße von 5 bis 50 nm und eine BET-Oberfläche von 40 bis 400 m²/g, vorzugsweise 100 bis 250 m²/g aufweisen.

Der Wassergehalt des eingesetzten pyrogen hergestellten Siliciumdioxids kann kleiner 1 Gew.-% betragen.

Das pyrogen hergestellte Siliciumdioxid kann mittels bekannter Verfahren und Vorrichtungen vorverdichtet sein. So können beispielsweise die Vorrichtungen gemäß US 4,325,686, US 4,877,595, US 3,838,785, US 3,742,566, US 3,762,851, US 3,860,682 verwendet werden.

In einer bevorzugten Ausführungsform der Erfindung kann man ein pyrogen hergestelltes Siliciumdioxid einsetzen, das mittels eines Pressbandfilters gemäß EP 0280851 B1 oder US 4,877,595 vorverdichtet wurde.

Der Transport des pyrogen hergestellten Siliciumdioxids zur Kompaktierung kann beispielsweise mittels einer Schnecke erfolgen.

Dieser Transport ist eine Zwangsführung des pyrogen hergestellten Siliciumdioxides in den Walzenspalt der Kompaktierwalzen. Falls keine Förderschnecke eingesetzt wird, muß ein vorverdichtetes pyrogen hergestelltes Siliciumdioxid eingesetzt werden.

Wird eine Förderschnecke verwendet, kann das pyrogen hergestellte Siliciumdioxid nicht vorverdichtet sein, weil hier eine Vorentlüftung stattfindet.

Zum Erreichen von hohen Schüttgewichten der Schülpen kann eine Förderschnecke und ein vorverdichtetes pyrogen hergestelltes Siliciumdioxid eingesetzt werden.

Als Förderschnecke kann eine Schnecke mit abnehmendem Volumen oder mit zunehmender Steigung oder mit abnehmendem Durchmesser eingesetzt werden.

Die Förderschnecke kann von einem mit Vakuum beaufschlagten Rohr umgeben sein. Dieses Rohr kann aus einem Sintermantel bestehen. Die Vorentlüftung des Siliciumdioxides erfolgt hier in der Transportschnecke gleichzeitig mit dem Transport in den Walzenspalt.

Die Kompaktierung zu Schülpen kann mittels zweier Walzen erfolgen, von denen eine oder auch beide gleichzeitig eine Entlüftungsfunktion haben können.

Es können vorzugsweise zwei Kompaktwalzen eingesetzt werden, die glatt sein können. Sie können auch profiliert sein. Das Profil kann sowohl nur auf einer Kompaktwalze als auch auf beiden Kompaktwalzen vorhanden bestehen.

Das Profil kann aus achsenparallelen Riffeln bestehen. Es kann alternativ aus beliebig angeordneten Mulden (Vertiefungen) in beliebiger Ausgestaltung sein.

In einer weiteren Ausführungsform der Erfindung kann mindestens eine der Walzen eine Vakuumwalze sein. In dieser Ausführungsform kann die Walze mit Sintermetall bespannt sein.

Um die Entlüftungsfunktion bewerkstelligen zu können, kann die Walze aus Sintermetall hergestellt sein oder mit einem Filtermedium, wie zum Beispiel mit einem Tuch, bespannt sein.

Falls eine Entlüftung des pyrogen hergestellten Siliciumdioxides mittels der Walzen möglich ist, kann auf die zusätzliche Vorentlüftung, die in der Förderschnecke oder dem Zuleitungsrohr erfolgen kann, verzichtet werden.

Wird die Walze zur Vorentlüftung verwendet, kann die Walze eine glatte oder profilierte Oberfläche aufweisen, wobei diese Oberfläche nur leicht geriffelt sein kann, um den Produkteinzug zu verbessern.

Bei der Kompaktierung sollte eine gleichmäßige Pressung des pyrogen hergestellten Siliciumdioxides gewährleistet sein, um Schülpen mit einer gleichmäßigen Dichte zu erhalten.

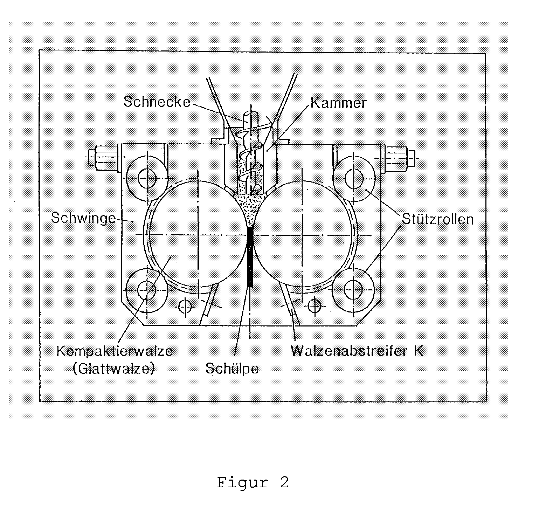

Für die Durchführung der Kompaktierung kann eine Vorrichtung, wie sie in der Figur 2 dargestellt ist, eingesetzt werden.

Gemäß Figur 2 wird das pyrogen hergestellte Siliciumdioxid mittels der Vorverdichterschnecke 1 in die Kammer 2 zwischen den beiden Walzen 3 eingeführt und zwischen den beiden Walzen zu Schülpen verpresst.

Zur Durchführung des erfindungsgemäßen Verfahrens kann weiterhin eine Vorrichtung eingesetzt werden, wie sie in dem Dokument DE AS 1807714 beschrieben wird.

Bei der Kompaktierung können, um Grit zu vermeiden, bevorzugt glatte Walzen eingesetzt werden. Es können weiterhin eine oder zwei Walzen aus Sinterwerkstoff, wie Sintermetall oder Sinterkeramik, eingesetzt werden, über die eine Entlüftung erfolgen kann.

Nach der Kompaktierung werden die Schülpen gebrochen. Hierzu kann ein Siebgranulator, der mit seiner Maschenweite des Siebes die Korngröße vorgibt, verwendet werden. Die Maschenweite kann 250 µm bis 20 mm betragen.

Für das Brechen der Schülpen kann weiterhin eine Vorrichtung mit zwei, sich gegensinnig drehenden Walzen mit einem definierten Spalt oder eine Stachelwalze eingesetzt werden.

Die gebrochenen Schülpen können mittels eines Sichters, eines Siebes oder eines Klassierers klassiert werden. Dabei kann der Feinanteil (Teilchen kleiner 200 µm) abgetrennt werden.

Als Sichter können Querstromsichter, Gegenstromumlenksichter etc. eingesetzt werden.

Als Klassierer kann ein Zyklon eingesetzt werden.

Der bei der Klassierung abgetrennte Feinanteil (Teilchen kleiner 200 µm) kann in das erfindungsgemäße Verfahren zurückgeführt werden.

### Bestimmung des Staubgehaltes

Die Bestimmung des Staubgehaltes erfolgt gemäß DIN 55992-2.

Vor der Messung wird eine abgewogene Menge der Schülpen des zu untersuchenden pyrogen hergestellten Siliciumdioxides in ein Beschickungssystem am oberen Ende des Fallrohres eingefüllt. Dieses ist vor dem Start der Messung nach unten durch Klappen verschlossen. Das Ende des Fallrohrs ist verschlossen. Mit dem Start der Messung wird diese Klappe für ein bestimmtes Zeitintervall geöffnet, sodaß die Probe in das Fallrohr fallen kann. Während des Fallens und beim Auftreffen auf den Boden des Fallrohrs gibt die Probe Staub an die Luft ab. Die Luftwirbel während des Fallens sorgen für eine gleichmäßige Verteilung des Staubes in dem Rohr. Anschließend beginnt die Sedimentation der Schwebstoffe. Am unteren Ende des Fallrohres wird die Lichtextinktion, die durch den Schwebstoff hervorgerufen wird, durch einen photometrischen Sensor gemessen. Der Sedimentationsverlauf wird als Funktion der Zeitdauer von einem PC aufgezeichnet. Beim Staubmessgeräte CIPACMT171 wird direkt die Extinktion E (in %) als Funktion der Sedimentationsdauer aufgetragen. Beim Staubmessgerät SP3 der Fa. Lorenz wird nach folgender Formel (Gl. 1) die Staubzahl SZ berechnet und als Funktion der Zeit aufgetragen.

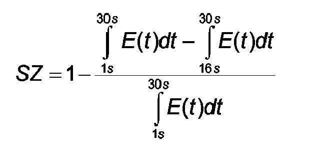

Die Staubzahl ist ein Maß für den Feinstaubgehalt der Probe. Dabei ist hier die Fraktion als "Feinstaub" bezeichnet, deren Sedimentationsgeschwindigkeit in Luft kleiner als 1m/16s = 0,0625 m/s ist.

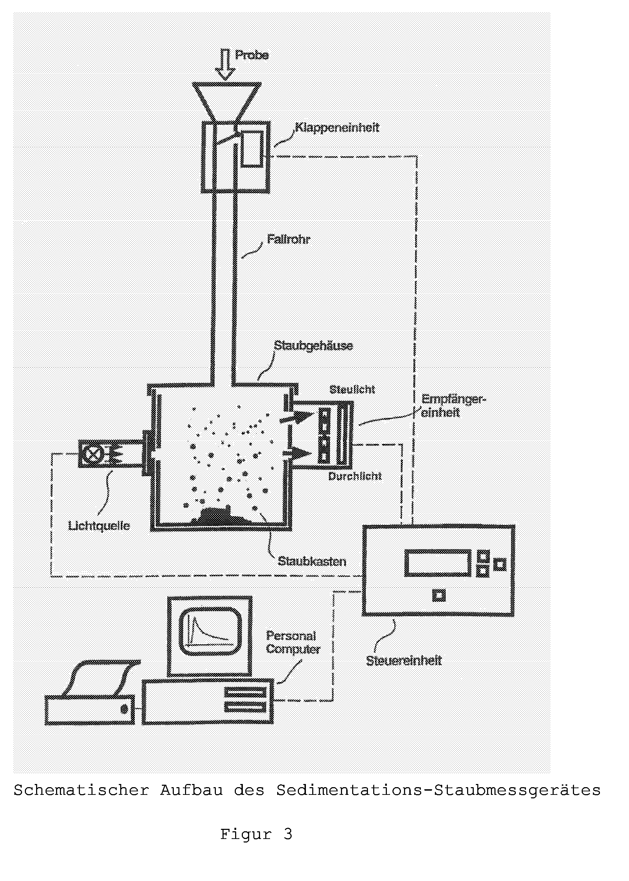

Eine schematische Darstellung der verwendeten Vorrichtung zur Bestimmung des Staubgehaltes ist in der Figur 3 dargestellt.

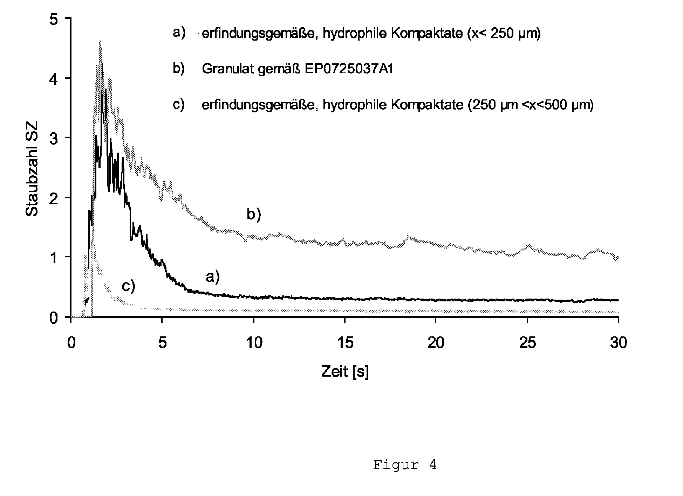

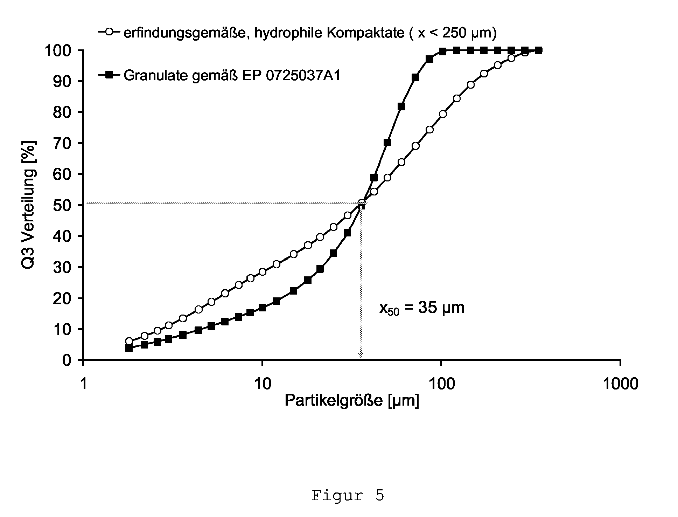

In der Figur 4 werden der Feinstaubgehalt des mittels des erfindungsgemäßen Verfahrens zu Schülpen kompaktierten, pyrogen hergestellten Siliciumdioxids und die Feinstaubanteile von pyrogenem Siliciumdioxid, das auf bekanntem Wege verdichtet wurde, gegenübergestellt.

Als Ausgangsmaterial für das erfindungsgemäße Verfahren wurde ein pyrogen hergestelltes Siliciumdioxid eingesetzt, das mittels des Preßbandfilters gemäß EP 0280851 B1 verdichtet wurde.

Figur 4 zeigt ein Maß für die Partikelgrößenverteilung und die mittlere Partikelgröße der Pulver- beziehungsweise Schülpenschüttung, die mit dem erfindungsgemäßen Verfahren hergestellt wurde. Hier zeigt sich, daß die erfindungsgemäßen Schülpen des pyrogen hergestellten Siliciumdioxides bedeutend besser sedimentieren und bedeutend weniger Staub entwickeln als die Granulate gemäß EP 0 725 037 A1.

Figur 4 zeigt weiterhin ein Maß für den Feinbeziehungsweise Schwebstaubgehalt. Hier zeigt sich, daß bei den erfindungsgemäßen Schülpen der Schwebstaubgehalt drastisch reduziert werden kann. Bei Granulaten gemäß EP 0 725 037 A1 bleibt ein großer Anteil sehr lange in Schwebe.

Figur 5 zeigt die Summenverteilung (Q-3-Verteilung) von verschiedenen Granulaten gemäß EP 0 725 037 A1. Keines dieser Granulate zeigt eine mittlere Teilchengröße von 120 µm. Lediglich die größten Partikel in diesem Kollektiv sind zwischen 96 und 128 µm groß. Dies sind weniger als 11 ‰

Die erfindungsgemäßen Schülpen mit X <250 µm haben in der Laserbeugungsspektroskopie dieselbe mittlere Partikelgröße wie das Granulat gemäß EP 0 725 037 A1. In beiden Fällen ist es ~ 35 µm.

Die erfindungsgemäßen Schülpen erzeugen jedoch bedeutend weniger Staub.

Die Fraktionen der Schülpen wurden durch Siebgranulierung mit einem Sieb der Maschenweite 500 µm und einer anschließenden Siebung auf einem 250 µm Sieb hergestellt. Die Fraktion x <250 µm war das Feingut bei der Siebung. Die Fraktion mit einer Partikelgröße zwischen 250 und 500 µm war das Grobgut.

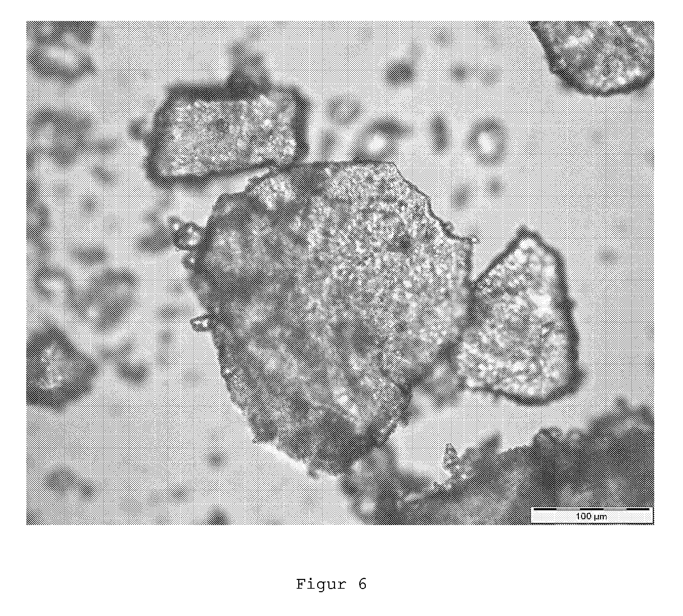

Figur 6 zeigt das erfindungsgemäß zu Schülpen kompaktierte, pyrogen hergestellte Siliciumdioxid in seiner Granulatform nach der Brechung und Siebung. Es weist eine kantige Form auf.

Die Granulate gemäß DE 19601415 weisen ein kugelförmiges Erscheinungsbild auf.

In einer bevorzugten Ausführungsform der Erfindung weisen die erhaltenen Schülpen eine Stampfdichte (nach DIN EN ISO 787-11) zwischen 200 und 400 g/l auf. Diese Schülpen weisen dann die notwendige Festigkeit auf, um nicht in den nachfolgenden Schritten wieder zu zerfallen. Sie lassen sich aber wieder gut dispergieren.

Weiterhin weisen die erhaltenen Schülpen eine Porosität auf.

Die erfindungsgemäßen Schülpen weisen nach dem Brechen auch ohne Siebung beziehungsweise Klassierung eine vorteilhafte Staubarmut auf.

Die erfindungsgemäßen Schülpen weisen eine Agglomerathärte von kleiner 50N, gemessen mit ERWEKA 30, auf.

Die erfindungsgemäßen Schülpen weisen nach dem Brechen keinen weiteren Staubanteil auf. Auch bei dem Handling, dem Transport oder der Lagerung entsteht bei den erfindungsgemäß erhaltenen Schülpen kein weiterer Staubanteil. Das zu Schülpen kompaktierte, pyrogen hergestellte Siliciumdioxid weist nach dem Sieben keinen Feinanteil mit einem Durchmesser von kleiner 200 µm auf.

Das erfindungsgemäß zu Schülpen kompaktierte pyrogen hergestellte Siliciumdioxid weist eine für alle Anwendungen vorteilhafte Staubarmut auf. Es kann ohne Verlust und ohne Staubbelästigung in Mischungen eingearbeitet werden.

Obwohl das pyrogen hergestellte Siliciumdioxid kompaktiert wurde, weisen die erfindungsgemäßen Schülpen eine ausreichende Redispergierbarkeit auf.

Das erfindungsgemäß zu Schülpen kompaktierte, pyrogen hergestellte Siliciumdioxid weist kein Bindemittel auf.

Das erfindungsgemäß zu Schülpen kompaktierte, pyrogen hergestellte Siliciumdioxid kann in Gummimischungen als Füllstoff eingesetzt werden.

## Patentansprüche

1. Zu Schülpen kompaktiertes, pyrogen hergestelltes Siliciumdioxid, **dadurch gekennzeichnet, daß** es eine Stampfdichte (nach DIN EN ISO 787-11) von 185 bis 700 g/l und aufweist.

2. Verfahren zur Herstellung des zu Schülpen kompaktierten pyrogen hergestellten Siliciumdioxids gemäß Anspruch 1, **dadurch gekennzeichnet, daß** man pyrogen hergestelltes Siliciumdioxid vorentlüftet beziehungsweise verdichtet, zu Schülpen kompaktiert, die Schülpen bricht und gegebenenfalls klassiert.

3. Verfahren zur Herstellung des zu Schülpen kompaktierten pyrogen hergestellten Siliciumdioxids gemäß Anspruch 2, **dadurch gekennzeichnet, daß** man ein vorverdichtetes pyrogen hergestelltes Siliciumdioxid einsetzt.

4. Verwendung des zu Schülpen kompaktierten, pyrogen hergestellten Siliciumdioxides gemäß Anspruch 1, als Füllstoff in Gummimischungen.
